# EUROPEAN PATENT APPLICATION

(11) **EP 4 075 634 A1**
(43) Date of publication of application: **19.10.2022**
(21) Application number: 20902906.5
(22) Date of filing: 07.12.2020
(51) Int. Cl.: H02J 7/00

(54) **CHARGING PROMPTING METHOD AND APPARATUS, ELECTRONIC DEVICE, AND COMPUTER-READABLE STORAGE MEDIUM**

(30) Priority: 20.12.2019 CN 201911324131
(71) Applicant: GUANGDONG OPPO MOBILE TELECOMMUNICATIONS CORP., LTD., Dongguan, Guangdong 523860 (CN)
(72) Inventor: XU, Weinan, Dongguan, Guangdong 523860 (CN)
(74) Representative: Thorniley, Peter
(86) International application number: PCT/CN2020/134159
(87) International publication number: WO 2021/121057

(57) **Abstract**

A charging prompting method includes: obtaining a charging state of an electronic device in a wireless charging process; in response to the charging state being an abnormal charging state, outputting charging prompting information at a first playing speed; and in response to the charging state being a normal charging state, outputting the charging prompting information at a second playing speed. The second playing speed being greater than the first playing speed.

## Description

### CROSS-REFERENCE TO RELATED APPLICATIONS

The present application claims priority to Chinese Patent Application No. 201911324131.4, titled "CHARGING PROMPTING METHOD AND APPARATUS, ELECTRONIC DEVICE, AND COMPUTER-READABLE STORAGE MEDIUM", filed on December 20, 2019 to China National Intellectual Property Administration, the entire disclosure of which is incorporated herein by reference.

### FIELD

The present disclosure relates to the field of charging, and more particularly, to a charging prompting method and apparatus, an electronic device, and a computer-readable storage medium.

### BACKGROUND

With the development of wireless charging technology, more users use wireless chargers to charge electronic devices. The wireless charging technology is derived from a wireless power transmission technology. The charging can be achieved by transmitting energy between a wireless charger and an electronic device in a magnetic field. During the charging of the electronic device, a charging symbol can be displayed on a battery icon.

### SUMMARY

Embodiments of the present disclosure provides a charging prompting method and apparatus, an electronic device, and a computer-readable storage medium, capable of enabling the electronic device in different charging states to prompt in different prompting forms.

A charging prompting method includes: obtaining a charging state of an electronic device in a wireless charging process; in response to the charging state being an abnormal charging state, outputting charging prompting information at a first playing speed; and in response to the charging state being a normal charging state, outputting the charging prompting information at a second playing speed, the second playing speed being greater than the first playing speed.

A charging prompting apparatus includes: a state obtaining module configured to obtain a charging state of an electronic device in a wireless charging process; and a charging prompting module configured to output, in response to the charging state being an abnormal charging state, charging prompting information at a first playing speed, and output, in response to the charging state being a normal charging state, the charging prompting information at a second playing speed, the second playing speed being greater than the first playing speed.

An electronic device includes a processor, and a memory having a computer program stored thereon. The computer program, when being executed by the processor, implements steps of: obtaining a charging speed of an electronic device in a wireless charging process; outputting, in response to the charging speed being smaller than a predetermined charging speed, charging prompting information at a first playing speed, the first playing speed being smaller than a first playing speed threshold.

A computer-readable storage medium has a computer program stored thereon. The computer program, when being executed by a processor, implements steps of: obtaining a charging state of an electronic device in a wireless charging process; outputting, in response to the charging state being an abnormal charging state, charging prompting information at a first playing speed; and outputting, in response to the charging state being a normal charging state, the charging prompting information at a second playing speed, the second playing speed being greater than the first playing speed.

According to the charging prompting method and apparatus, the electronic device, and the computer-readable storage medium provided by the embodiments of the present disclosure, the charging state of the electronic device in the wireless charging process is obtained, when the charging state is the abnormal charging state, the charging prompting information is output at the first playing speed; and when the charging state is the normal charging state, the charging prompting information is output at the second playing speed greater than the first playing speed. In this way, different prompting forms can be adopted to prompt in different charging states, and thus the user of the electronic device can be visually prompted that the electronic device is in the abnormal charging state, thereby shortening the invalid charging time of the electronic device and improving a charging efficiency.

A charging prompting method includes: obtaining a charging speed of an electronic device in a wireless charging process; in response to the charging speed being smaller than a predetermined charging speed, outputting charging prompting information at a first playing speed, the first playing speed being smaller than a first playing speed threshold.

A charging prompting apparatus includes: a speed obtaining module configured to obtain a charging speed of an electronic device in a wireless charging process; and a charging prompting module configured to, when the charging speed is smaller than a predetermined charging speed, output charging prompting information at a first playing speed, the first playing speed being smaller than a first playing speed threshold.

An electronic device includes a processor; and a memory having a computer program stored thereon. The computer program, when being executed by the processor, implements steps of: obtaining a charging speed of an electronic device in a wireless charging process; in response to the charging speed being smaller than a predetermined charging speed, outputting charging prompting information at a first playing speed, the first playing speed being smaller than a first playing speed threshold.

A computer-readable storage medium has a computer program stored thereon. The computer program, when being executed by a processor, implements steps of: obtaining a charging speed of an electronic device in a wireless charging process; in response to the charging speed being smaller than a predetermined charging speed, outputting charging prompting information at a first playing speed, the first playing speed being smaller than a first playing speed threshold.

According to the charging prompting method and apparatus, the electronic device, and the computer-readable storage medium provided by the embodiments of the present disclosure, the charging speed of the electronic device in the wireless charging process is obtained, and in response to the charging speed being smaller than the predetermined charging speed, the charging prompting information is output at the first playing speed, and the first playing speed is smaller than a first playing speed threshold. In this way, the user of the electronic device can be visually prompted that the electronic device is in the abnormal charging state, thereby shortening the invalid charging time of the electronic device and improving a charging efficiency.

The details of one or more embodiments of the present disclosure are set forth in accompanying drawings and the description below. Other features, objects, and advantages of the present disclosure will be apparent from the description, the accompanying drawings, and the claims.

### BRIEF DESCRIPTION OF DRAWINGS

In order to clearly explain embodiments of the present disclosure or technical solutions in the prior art, the drawings used for describing the embodiments or the prior art are briefly introduced below. Obviously, the drawings described below are merely some embodiments of the present disclosure. Based on these drawings, those skilled in the art can obtain other drawings without paying creative effort.
FIG. 1 is a schematic diagram illustrating an application environment for wireless charging of an electronic device according to an embodiment.
FIG. 2 is a flowchart of a charging prompting method according to an embodiment.
FIG. 3 is a schematic diagram illustrating charging prompting information in a charging misaligning state according to an embodiment.
FIG. 4 is a schematic diagram illustrating charging prompting information in a normal charging state according to an embodiment.
FIG. 5A is a schematic diagram illustrating misaligning prompting information in a screen-blanking state according to an embodiment.
FIG. 5B is a schematic diagram illustrating misaligning prompting information in a screen-blanking state according to another embodiment.
FIG. 6 is a schematic diagram illustrating charging prompting information displayed after a position of an electronic device is adjusted in the screen-blanking state according to an embodiment.
FIG. 7 is a schematic diagram illustrating a display of misaligning prompting information in a screen-lighting state according to an embodiment.
FIG. 8 is a schematic diagram illustrating charging prompting information outputted in a screen-lighting state according to an embodiment.
FIG. 9 is a schematic diagram illustrating charging prompting information outputted in use of an electronic device according to an embodiment.
FIG. 10 is a flowchart of a charging prompting method according to another embodiment.
FIG. 11 is a structural block diagram of a charging prompting apparatus according to an embodiment.
FIG. 12 is a structural block diagram of a charging prompting apparatus according to another embodiment.
FIG. 13 is a structural block diagram of a charging prompting apparatus according to yet another embodiment.
FIG. 14 is a structural block diagram of a charging prompting apparatus according to yet another embodiment.
FIG. 15 is a schematic diagram of an internal structure of an electronic device according to an embodiment.

### DESCRIPTION OF EMBODIMENTS

In order to clearly explain the objects, technical solutions and advantages of the present disclosure, the present disclosure is described in detail below with reference to accompanying drawings and embodiments. It should be understood that the specific embodiments described herein are merely intended to illustrate the present disclosure, instead of limiting the present disclosure.

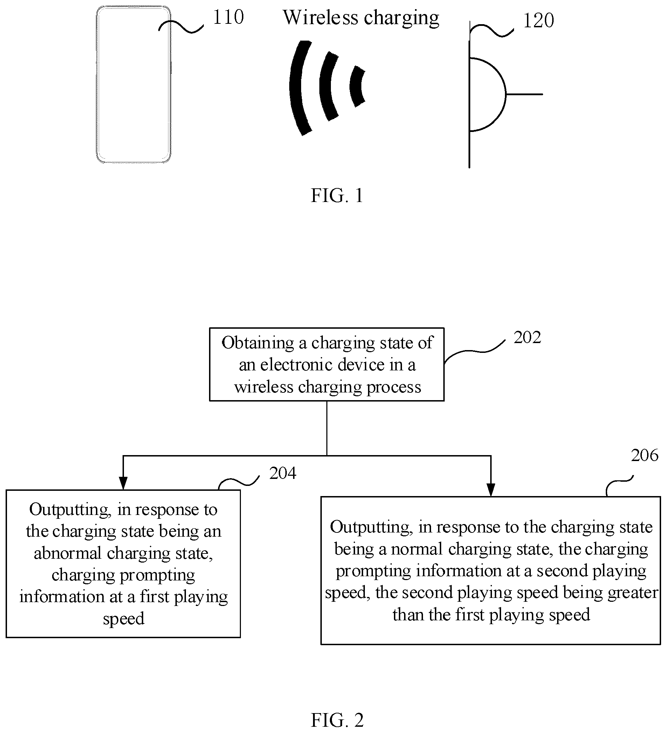

FIG. 1 is a schematic diagram illustrating an application environment for wireless charging of an electronic device according to an embodiment. As illustrated in FIG. 1, the application environment includes an electronic device 110 and a wireless charging device 120. The wireless charging apparatus 120 may be a wireless charging base, a wireless power bank, or a wireless charging adapter. The wireless power bank, when having electric energy, can transmit wireless power to wirelessly charge the electronic device 110. The wireless charging base and the wireless charging adapter require an external power supply, and after they are connected to the external power supply, the wireless power can be emitted to wirelessly charge the electronic device 110. The electronic device 110 may be a mobile phone, a tablet computer, a wearable device, a wireless headset, a wireless sound box, etc.

FIG. 2 is a flowchart of a charging prompting method according to an embodiment. As illustrated in FIG. 2, a charging prompting method includes the following actions in block.

At block 202, a charging state of an electronic device in a wireless charging process is obtained.

The charging state indicates a charging condition of the electronic device. The charging state may include a normal charging state and an abnormal charging state. The normal charging state refers to that the electronic device is normally charged by a wireless charging device paired with the electronic device in accordance with a predetermined charging power. The predetermined charging power may be a rated operating power of the wireless charging device. The paired wireless charging device generally refers to a wireless charging device, charging parameters or charging specifications of which are compatible with the electronic device and provided by the same service provider. The normal charging state may be that a receiving coil of the electronic device is aligned with a transmitting coil of the wireless charging device during the charging with the wireless charging device paired with the electronic device. The abnormal charging state refers to a charging state other than the normal charging state. The abnormal charging state may include a charging misaligning state, a charging state that a charging power provided by the wireless charging device is smaller than the predetermined charging power, a charging state that an obstacle exists between the electronic device and the wireless charging device, and the like. The charging misaligning state refers to a charging state in which the receiving coil of the electronic device is misaligned with the transmitting coil of the wireless charging device, resulting in a reduced charging efficiency of the electronic device. The misalignment of the receiving coil of the electronic device and the transmitting coil of the wireless charging device may include the following scenarios: the receiving coil not completely coinciding with the transmitting coil (when the two coils are of the same size); a center of the receiving coil not overlapping a center of the transmitting coil; the receiving coil not being completely within an enclosing range of the transmitting coil; and the like.

When the charging state of the electronic device is obtained in the wireless charging process, the charging power can be obtained and compared with the predetermined charging power to determine a current charging state. The predetermined charging power is set in advance and is the same as the rated charging power of the wireless charging device paired with the electronic device.

In an embodiment, when the charging power of the electronic device in the wireless charging process is the predetermined charging power, the charging state of the electronic device is the normal charging state; and when the charging power of the electronic device in the wireless charging process is smaller than the predetermined charging power, the charging state of the electronic device is the abnormal charging state.

At block 204, in response to the charging state being the abnormal charging state, charging prompting information is output at a first playing speed.

The first playing speed may be predetermined as required, for example, 10 frames per second, 20 frames per second, etc., but it is not limited thereto. The charging prompting information may be animated information, audio information, text information, or the like. When the charging prompting information is the animated information, the first playing speed may be a number of frames of animation per second. When the charging prompting information is the audio information, the first playing speed may be a playing speed of sound, such as a number of words per second. When the charging prompting information is the text information, the first playing speed is the playing speed of the text information, such as a number of words per second.

At block 206, in response to the charging state being the normal charging state, the charging prompting information is output at a second playing speed. The second playing speed is greater than the first playing speed.

The second playing speed can be set as needed. Since the second playing speed is greater than the first playing speed, the user can be prompted more visually that the charging state of the electronic device returns to the normal charging state.

In the present embodiment, the charging state of the electronic device in the wireless charging process is obtained; when the charging state is determined to be the abnormal charging state, the charging prompting information is output at the first playing speed; and when the charging state is the normal charging state, the charging prompting information is output at the second playing speed, the second playing speed being greater than the first playing speed. In this way, different prompting forms can be adopted to prompt in different charging states, and thus the user of the electronic device can be visually prompted that the electronic device is in the abnormal charging state, thereby shortening the invalid charging time of the electronic device and improving a charging efficiency.

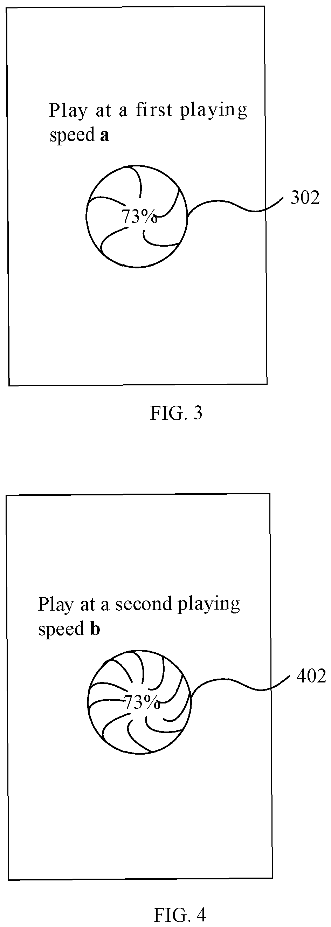

FIG. 3 is a schematic diagram illustrating charging prompting information in a charging misaligning state according to an embodiment. As illustrated in FIG. 3, as an example, the charging prompt information includes the animated information. The animated information 302 is played at the first playing speed on a display interface of the electronic device. The first playing speed is a frames/second, where a is a positive number. The animated information may include a charged amount. The charged amount may be expressed in percentage, such as 73%, as illustrated in FIG. 3. The charged amount may be presented in other ways, for example, an integer between 0 and 100, in different colors, and the like. In other embodiments, the animated information may further include a charging duration, and the like.

FIG. 4 is a schematic diagram illustrating charging prompting information in a normal charging state according to an embodiment. As illustrated in FIG. 4, as an example, the charging prompt information includes the animated information. The animated information 402 is played at the second playing speed on the display interface of the electronic device. The second playing speed is b frames/second, where b is a positive number greater than a. The animated information may include a charged amount. The charged amount may be expressed in percentage, such as 73% as illustrated in FIG. 4. The charged amount may be represented in other ways, such as an integer between 0 and 100. In other embodiments, the animated information may further include a charging duration, and the like.

In an embodiment, the abnormal charging state is a charging misaligning state, in which the receiving coil of the electronic device is misaligned with the transmitting coil of the wireless charging device. The charging prompting method further includes: displaying, in response to the charging state being the charging misaligning state and the electronic device being in a screen-blanking state, misaligning prompting information in the screen-blanking state. The misaligning prompting information is used to indicate that the receiving coil of the electronic device is misaligned with the transmitting coil of the wireless charging device.

The screen-blanking state refers to a state that a backlight of a screen of the electronic device is turned off. The misaligning prompting information is used to indicate that the receiving coil of the electronic device is misaligned with the transmitting coil of the wireless charging device. The misaligning prompting information may include marked position information of the receiving coil of the electronic device and marked position information of the transmitting coil of the wireless charging device. The misalignment between the receiving coil of the electronic device and the transmitting coil of the wireless charging device can be indicated by their marked position information.

In an embodiment, the transmitting coil of the wireless charging device may be disposed at a central position of the wireless charging device, and at least one group of symmetrical pressure sensors is arranged around the transmitting coil of the wireless charging device. Each group of symmetrical pressure sensors includes two pressure sensors. The two pressure sensors are symmetrically arranged with respect to the center of the transmitting coil. The receiving coil of the electronic device is disposed at the center of the electronic device. When the electronic device is placed on the wireless charging device for charging, the pressure sensors symmetrically arranged around the transmitting coil of the wireless charging device can detect pressure values. When an absolute value of a pressure difference between the two symmetrical pressure sensors is greater than a first predetermined pressure value, the receiving coil of the electronic device is considered to be misaligned with the transmitting coil of the wireless charging device, i.e., a misalignment exists during the charging. A direction and a distance that the electronic device should be moved are determined based on the pressure difference. When the electronic device is skewed towards the pressure sensor having a greater pressure value, the electronic device needs to be moved towards the pressure sensor having a smaller pressure value. When the absolute value of the pressure difference between the two symmetrical pressure sensors is smaller than or equal to a second predetermined pressure value, the receiving coil of the electronic device is considered to be aligned with the transmitting coil of the wireless charging device, i.e., no misalignment exists during the charging. The first predetermined pressure value is greater than or equal to the second predetermined pressure value.

The electronic device may receive a message transmitted by the wireless charging device and indicating that the receiving coil of the electronic device is misaligned with the transmitting coil of the wireless charging device. It is determined, based on the message, that the charging state of the electronic device is the charging misaligning state. The message indicating that the receiving coil of the electronic device is misaligned with the transmitting coil of the wireless charging device is generated when it is detected that the absolute value of the pressure difference between the at least one group of two symmetrical pressure sensors obtained by the wireless charging device is greater than the first predetermined pressure value.

Optionally, the electronic device may further receive information transmitted by the wireless charging device and indicating a direction and a distance that the electronic device needs to move.

In other embodiments, when the electronic device is being charged and detects that a coupling resonant frequency between the receiving coil and the transmitting coil of the wireless charging device is smaller than a predetermined frequency, it is determined that the charging state of the electronic device is the charging misaligning state. The predetermined frequency is determined based on coupling resonance characteristics of the receiving coil of the electronic device and the transmitting coil of the wireless charging device, and it can also be obtained by testing a relation between the misalignment and the coupling resonance frequency for multiple times.

In an embodiment, the misaligning prompting information may be presented in at least one form of text, audio, or graphics. In the form of text, the misaligning prompting information is directly displayed as text on the electronic device, for example, when the misalignment exists during charging, a position of the electronic device needs to be adjusted to charge more efficiently, and the like, which is not limited in the present disclosure. In the form of audio, the misaligning prompting information is played by sound. In the form of graphics, two graphs are adopted to respectively represent the receiving coil of the electronic device and the transmitting coil of the wireless charging device, so as to display the misaligning prompting information.

The marked position information of the receiving coil of the electronic device and the marked position information of the transmitting coil of the wireless charging device may be represented in the form of graphics. The receiving coil and the transmitting coil may be represented using the same graphic or different graphics. The receiving coil and the transmitting coil are represented by the same graphic. For example, two circles on the display interface respectively represent a marked position of the receiving coil and a marked position of the transmitting coil. Alternatively, two round dots on the display interface respectively represent the marked position of the receiving coil and the marked position of the transmitting coil. In the case that the positions of the two graphics completely coincide, the charging is regarded as not misaligned. The graphics may also be triangles, polygons, etc. The receiving coil and the transmitting coil are represented by different graphics. For example, on the display interface, a circle represents the marked position of the receiving coil, and a rectangle represents the marked position of the transmitting coil. When an overlap ratio of the positions of the two graphics reaches the maximum value, the charging is not misaligned. Optionally, the marked position information of the receiving coil and the marked position information of the transmitting coil may also be represented by graphics with colors. For example, the marked position information of the receiving coil is represented by a blue circle, and the marked position information of the transmitting coil is represented by a red circle. In other embodiments, the misaligning prompting information may also include text information. The text information may include a position adjustment prompt, etc.

In the embodiment, when the charging state is the charging misaligning state, the misaligning prompting information is displayed in the screen-blanking state. In this way, it can more clearly prompt the user of the charging misalignment of the electronic device and remind the user to adjust the position of electronic device to obtain higher charging efficiency, thereby shortening the invalid charging time of electronic device.

In an embodiment, the charging prompting method described above further includes: stopping, in response to detecting that a position of the electronic device is continuously changed for predetermined times and in response to the charging state of the electronic device being still in the charging misaligning state, outputting the misaligning prompting information.

It can be detected by a gyroscope whether the position of the electronic device is changed. After the detecting begins, the charging state of the electronic device is detected, and when the electronic device is in the charging misaligning state, one change of the position of the electronic device is recorded. After the change of the position of the electronic device is recorded for predetermined times, the output of the misaligning prompting information is stopped. The predetermined times are determined as needed, such as 3 times, 4 times, 5 times, and the like, which is not limited herein.

In an embodiment, said displaying the misaligning prompting information in the screen-blanking state includes: displaying the misaligning prompting information in an Always-On display mode in the screen-blanking state.

The Always-On display mode is to adopt the Always-On Display (AOD) technology to continuously display in the screen-blanking state

In the Always-On display mode, the misaligning prompting information is continuously displayed in the screen-blanking state to constantly prompt the user of the charging misalignment and of that the position of the electronic device needs to be adjusted in time. In this way, the charging efficiency is improved. The Always-On display mode can play a role in the prompting and can also save the electric quantity of the electronic device.

In an embodiment, the charging prompting method further includes: after the misaligning prompting information is displayed in the screen-blanking state, in response to detecting the charging state of the electronic device to be the normal charging state, controlling the misaligning prompting information to disappear, and playing the charging prompting information at the second playing speed. The normal charging state is that the receiving coil of the electronic device is aligned with the transmitting coil of the wireless charging device.

After the misaligning prompting information is displayed in the screen-blanking state, when the charging position of the electronic device is adjusted based on the misaligning prompting information by the user so that the charging state of the electronic device is the normal charging state, the misaligning prompting information is controlled to disappear, and the charging prompting information is played at the second playing speed to remind the user that the charging is normal.

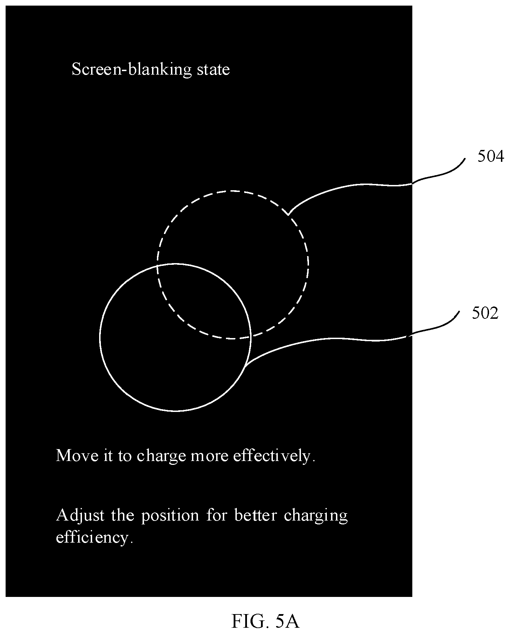

FIG. 5A is a schematic diagram illustrating misaligning prompting information in a screen-blanking state according to an embodiment. As illustrated in FIG. 5A, the misaligning prompting information includes a solid circle 502, a dotted circle 504, and text information. The solid circle represents the marked position of the receiving coils of the electronic device. The dotted circle represents the marked position of the transmitting coil of the wireless charging device. The text information includes "Move it to charge more effectively", "Adjust position for better charging efficiency", and the like. In other embodiments, the charging prompting information may also be displayed when the electronic device is in the screen-blanking state. The charging prompting information is played at the first playing speed.

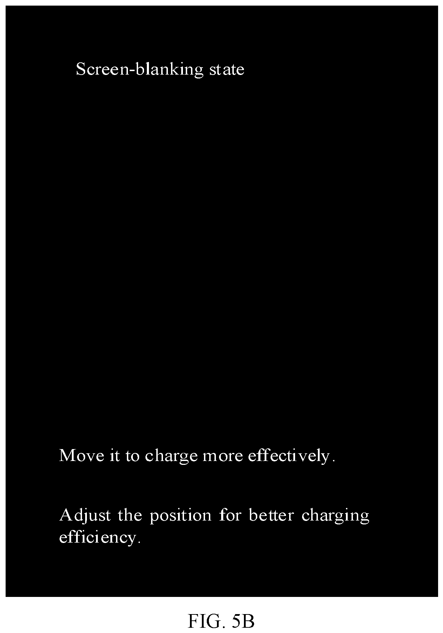

An embodiment illustrated in FIG. 5B differs from FIG. 5A in that the solid circle 502 and the dotted circle 504 are omitted and the text information is used for prompting.

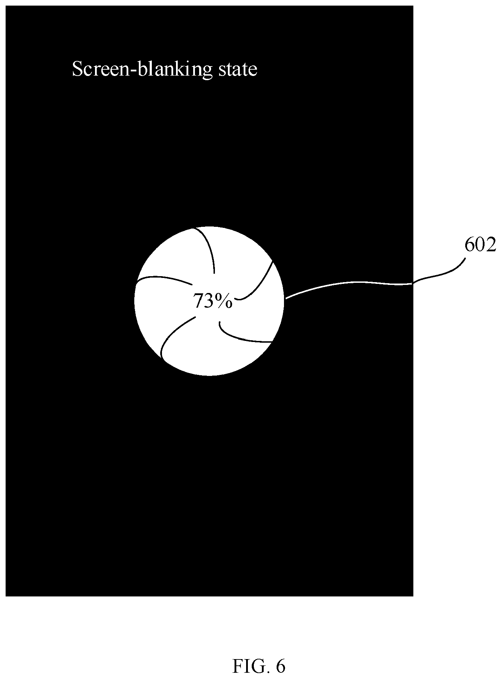

FIG. 6 is a schematic diagram illustrating charging prompting information displayed after a position of an electronic device is adjusted in the screen-blanking state according to an embodiment. As illustrated in FIG. 6, when the user sees that the electronic device displays the misaligning prompting information in the screen-blanking state as illustrated in FIG. 5, the position of the electronic device is adjusted, and the electronic device detects that the charging power is equal to the predetermined charging power, indicating that the electronic device is in the normal charging state, and the electronic device plays animated information 602 at the second playing speed for a charging prompt.

In an embodiment, prior to displaying the misaligning prompting information in the screen-blanking state, the charging prompting method further includes: controlling, in response to the charging state being the charging misaligning state and the electronic device being in the screen-blanking state, the electronic device to enter the screen-lighting state from the screen-blanking state and display a misaligning prompting window containing the misaligning prompting information in the screen-lighting state. The charging misaligning state indicates that the receiving coil of the electronic device is misaligned with the transmitting coil of the wireless charging device. The misaligning prompting information is used to indicate that the receiving coil of the electronic device is misaligned with the transmitting coil of the wireless charging device.

Optionally, in response to a display duration of the misaligning prompting window reaching a first predetermined duration and a triggering operation on the misaligning prompting window not being obtained, the electronic device is controlled to enter the screen-blanking state and display the misaligning prompting information in the screen-blanking state.

The screen-lighting state refers to a lighting state of the screen of the electronic device. The misaligning prompting window is used for displaying the misaligning prompting information. The misaligning prompting window can be a pop-up window or a floating window, etc. The misaligning prompting information may be represented in at least one form of text, audio, or graphic. The misaligning prompting information may include the marked position information of the receiving coil of the electronic device and the marked position information of the transmitting coil of the wireless charging device. The misalignment between the receiving coil of the electronic device and the transmitting coil of the wireless charging device may be indicated by the marked position information of the receiving coil of the electronic device and the marked position information of the transmitting coil of the wireless charging device. For example, the marked position information of the receiving coil of the electronic device and the marked position information of the transmitting coil of the wireless charging device may be represented in the form of graphics. The marked position information of the receiving coil of the electronic device and the marked position information of the transmitting coil of the wireless charging device may be represented by the same graphic or different graphics. The marked position information of the receiving coil of the electronic device and the marked position information of the transmitting coil of the wireless charging device are represented by the same graph, for example, two circles on the display interface respectively represent the marked position information of the receiving coil of the electronic device and the marked position information of the transmitting coil of the wireless charging device. Alternatively, two round dots on the display interface respectively represent the marked position of the receiving coil and the marked position of the transmitting coil. In the case that the positions of the two graphics completely coincide, the charging is regard as not misaligned. The graphics may also be triangles, polygons, etc. The marked position information of the receiving coil of the electronic device and the marked position information of the transmitting coil of the wireless charging device may be represented by different graphics. For example, on the display interface, a circle represents the marked position of the receiving coil, and a rectangle represents the marked position of the transmitting coil. When an overlap of the positions of the two graphics reaches the maximum value, the charging is not misaligned. Optionally, the marked position information of the receiving coil and the marked position information of the transmitting coil may also be represented by graphics with colors. For example, the marked position information of the receiving coil is represented by a blue circle, and the marked position information of the transmitting coil is represented by a red circle. In other embodiments, the misaligning prompting information may also include text information. The text information may include a position adjustment prompt, etc.

The first predetermined duration can be determined as needed, for example, 2 seconds, 3 seconds, 5 seconds, 1 minute, and the like. The display duration of the misaligning prompting window is timed from the occurrence of the misaligning prompting window.

When the charging misalignment is detected in the screen-blanking state, the electronic device is controlled to enter the screen-lightening state from the screen-blanking state and display the misaligning prompting window containing the misaligning prompting information in the screen-lightening state. In this way, when the charging misalignment is detected in the screen-blanking state, the electronic device can timely enter the screen-lightening state, and the misaligning prompting window is displayed in the screen-lightening state to display misaligning prompting information through the misaligning prompting window. The screen-lightening and the misaligning prompting information, as double prompting, can achieve an intensive prompting.

The triggering operation on the misaligning prompting window may include clicking, double clicking, applying a pressing force greater than a pressure threshold, pressing for a pressing duration longer than a duration threshold, and the like. When the display duration of the misaligning prompting window reaches the first predetermined duration and the triggering operation on the misaligning prompting window is not obtained, the electronic device is controlled to enter the screen-blanking state, and the wireless charging is continued, such that a brightness of the screen can be reduced, thereby preventing the charging efficiency from being influenced.

In an embodiment, when the electronic device is controlled to enter the screen-lighting state from the screen-blanking state and display the misaligning prompting window containing the misaligning prompting information in the screen-lighting state, the charging prompting information can be output at the first playing speed in the screen-lighting state.

By simultaneously outputting the misaligning prompting information and the charging prompting information, the charging misalignment can be prompted in a combination of various modes, and the user can be reminded of performing an adjustment in time, reaching a more intensive prompt effect.

In an embodiment, when the display duration of the misaligning prompting window reaches the first predetermined duration and the triggering operation on the misaligning prompting window is not obtained, subsequent to controlling the electronic device to enter the screen-blanking state, the misaligning prompting window can be automatically closed and display the misaligning prompting information in an Always-On display mode in the screen-blanking state to display the misaligning prompting information in a simpler way.

In an embodiment, the charging prompting method further includes: after the electronic device enters the screen-blanking state, starting timing. When reaching a specified duration and detecting the charging state of the electronic device to be the charging misaligning state, the electronic device is controlled to enter the screen-lighting state from the screen-blanking state again and display the misaligning prompting window containing the misaligning prompting information in the screen-lighting state. When the display duration of the misaligning prompting window reaches the first predetermined duration and the triggering operation on the misaligning prompting window is not obtained, the electronic device is controlled to enter the screen-blanking state again. The specified duration can be determined as needed. In this way, the user can be repeatedly reminded of performing an adjustment on the charging position to improve the charging efficiency.

In an embodiment, the charging prompting method further includes: in response to a triggering operation on the misaligning prompting window being obtained, controlling the misaligning prompting window to disappear; and outputting the charging prompting information at the first playing speed in the screen-lighting state.

The triggering operation on the misaligning prompting window may include clicking, double clicking, applying a pressing force greater than a pressure threshold, pressing for a pressing duration longer than a duration threshold, and the like. After the misaligning prompting window is displayed, in response to obtaining the user's triggering operation on the misaligning prompting window, the misaligning prompting window is controlled to disappear, and the charging prompting information is played at the first playing speed in the screen-lighting state. In this way, the user's response to the misaligning prompting window can be obtained, and a space occupied by the misaligning prompting window on the display interface of the electronic device can be reduced. The disappearance of the misaligning prompting window can be a closure of the misaligning prompting window or a hiding of the misaligning prompting window.

In an embodiment, the charging prompting method further includes: after the charging prompting information is output at the first playing speed in the screen-lighting state, in response to detecting the charging state of the electronic device to be the normal charging state, outputting the charging prompting information at the second playing speed in the screen-lighting state.

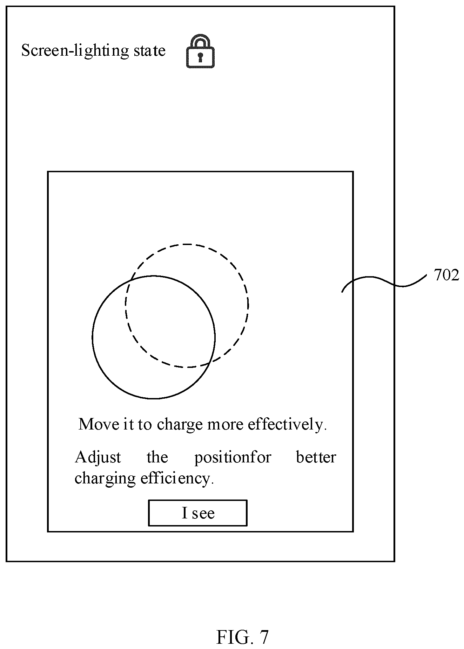

FIG. 7 is a schematic diagram illustrating a displaying of misaligning prompting information in a screen-lighting state according to an embodiment. As illustrated in FIG. 7, during a wireless charging of the electronic device in the screen-lighting state, a charging misalignment is detected, and a misaligning prompting window 702 containing the misaligning prompting information is displayed in a pop-up window. The misaligning prompting information includes a solid circle, a dotted circle, and text information. The solid circle indicates the position of the electronic device. The dotted circle indicates the position of the wireless charging device. The text information includes "Move it to charge more effectively", "Adjust the position for better charging efficiency", and the like. In other embodiments, the charging prompting information may also be displayed when the electronic device is in the screen-lighting state. The charging prompting information is played at the first playing speed. A control of "I knew it" is also displayed in the misaligning prompting window, and when it is detected that the user clicks the control of "I knew it", the misaligning prompting window disappears. The charging prompting information is output at the first playing speed in the screen-lighting state.

In an embodiment, the charging prompting method further includes: after the misaligning prompting information is displayed in the screen-blanking state, in response to detecting the charging state to be the normal charging state, controlling the misaligning prompting information to disappear, and outputting the charging prompting information at the second playing speed.

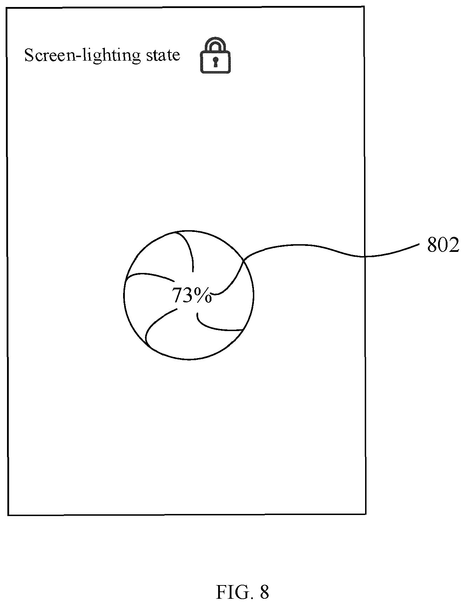

FIG. 8 is a schematic diagram illustrating charging prompting information outputted in a screen-lighting state according to an embodiment. As illustrated in FIG. 8, when the electronic device displays the misaligning prompting window in the screen-lighting state and displays the misaligning prompting information in the misaligning prompting window, if it is detected that the user performs a triggering operation on the misaligning prompting window, the misaligning prompting window is closed, and the charging prompting information 802 is displayed at the first playing speed in the screen-lighting state. When the user adjusts the position of the electronic device, if the electronic device detects that the charging power is equal to the predetermined charging power, the electronic device is in the normal charging state, and the charging prompting information is displayed at the second playing speed in the screen-lighting state.

In an embodiment, the charging prompting method further includes: displaying, in response to the charging state being the charging misaligning state and the electronic device being in the screen-lighting state, the misaligning prompting window containing the misaligning prompting information. The charging misaligning state refers that the receiving coil of the electronic device is misaligned with the transmitting coil of the wireless charging device, and the misaligning prompting information is used to indicate that the receiving coil of the electronic device is misaligned with the transmitting coil of the wireless charging device.

The screen-lighting state refers to a lighting state of the screen of the electronic device. The misaligning prompting window is used for displaying the misaligning prompting information. The misaligning prompting window can be a pop-up window or a floating window, etc. The misaligning prompting information may be represented in at least one form of text, audio, or graphic. The misaligning prompting information may include the marked position information of the receiving coil of the electronic device and the marked position information of the transmitting coil of the wireless charging device. The marked position information of the receiving coil of the electronic device and the marked position information of the transmitting coil of the wireless charging device may be represented by graphics. As illustrated in FIG. 7, during the wireless charging of the electronic device performs in the screen-lighting state, if charging misalignment is detected, the misaligning prompting window containing the misaligning prompting information is displayed in the pop-up window.

In an embodiment, when the charging state is the charging misaligning state and the electronic device is in the screen-lighting state, the charging prompting method further includes: subsequent to displaying the misaligning prompting window containing the misaligning prompting information, in response to obtaining the triggering operation on the misaligning prompting window, controlling the misaligning prompting window to disappear, and outputting the charging prompting information at the first playing speed in the screen-lighting state.

The triggering operation on the misaligning prompting window may include clicking, double clicking, applying a pressing force greater than a pressure threshold, pressing for a pressing duration longer than a duration threshold, and the like. After the misaligning prompting window is displayed, in response to obtaining the user's triggering operation on the misaligning prompting window, the misaligning prompting window is controlled to disappear, and the charging prompting information is played at the first playing speed in the screen-lighting state. In this way, the user's response to the misaligning prompting window can be obtained, and a space occupied by the misaligning prompting window on the display interface of the electronic device can be reduced. The disappearance of the misaligning prompting window can be a closure of the misaligning prompting window or a hiding of the misaligning prompting window.

In an embodiment, after the misaligning prompting window is controlled to disappear and the charging prompting information is output at the first playing speed in the screen-lighting state, the charging prompting method further includes: outputting, in response to detecting the charging state of the electronic device to be the normal charging state, the charging prompting information at the second playing speed in the screen-lighting state. The normal charging state refers that the receiving coil of the electronic device is aligned with the transmitting coil of the wireless charging device.

In an embodiment, when the charging state is the charging misaligning state and the electronic device is in the screen-lighting state, and when the misaligning prompting window containing the misaligning prompting information is displayed in the screen-lighting state, the charging prompting information can be output at the first playing speed in the screen-lighting state.

In the screen-lighting state, by simultaneously outputting the misaligning prompting information and the charging prompting information, the charging misalignment can be prompted in a combination of various modes, and the user can be reminded of performing an adjustment in time, reaching a more intensive prompt effect.

In an embodiment, the charging prompting method further includes: when the display duration of the misaligning prompting window reaches a second predetermined duration and the triggering operation on the misaligning prompting window is not obtained, controlling the misaligning prompting window to disappear, and outputting the charging prompting information at the first playing speed in the screen-lighting state.

The second predetermined duration can be determined as needed, for example, it can be 2 seconds, 3 seconds, 5 seconds, 1 minute, and the like. The display duration of the misaligning prompting window is timed from the occurrence of the misaligning prompting window. The misaligning prompting window can be controlled to disappear by closing or hiding the misaligning prompting window.

In an embodiment, said outputting the charging prompting information includes: outputting the charging prompting information in a floating window on the electronic device. The floating window is used to indicate that, when a triggering operation on the floating window is detected, an interface element covered by the floating window can respond to the triggering operation.

The charging prompting information is displayed in the floating window without affecting the triggering operation on the screen of the electronic device. That is, the floating window will neither intercept the triggering operation nor respond to the triggering operation. In this way, by displaying the charging prompting information in the floating window, which will not respond to the triggering operation, it is avoided that the charging prompting information of the wireless charging disturbs the user's current operation. The interface element may be an application, a control, etc. on the interface of the electronic device.

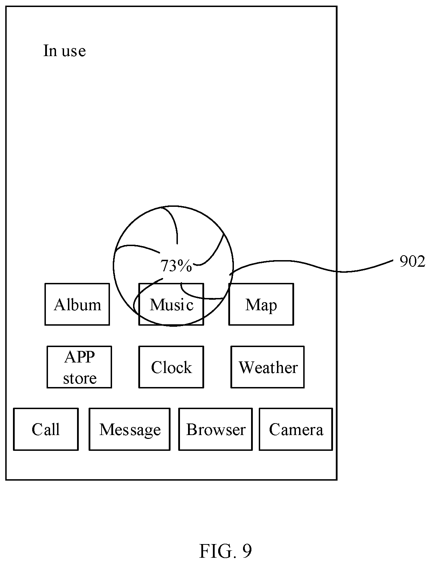

FIG. 9 is a schematic diagram illustrating charging prompting information outputted in use of an electronic device according to an embodiment. As illustrated in FIG. 9, a plurality of application icons can be displayed on the display interface of the electronic device, for example, a music application icon, a photo album application icon, an application store application icon, a map application icon, a weather application icon, a clock application icon, a telephone call application icon, a short message application icon, a browser application icon, a camera application icon, etc. The charging prompting information 902 is displayed in a display window and played at the first playing speed or the second playing speed. The charging prompting information also includes a percentage of charged amount, such as 73%, etc. When the user clicks the charging prompting information, the music application icon under the charging prompting information can be clicked and initiated without triggering the charging prompting information.

In an embodiment, after the floating window of the electronic device outputs the charging prompting information, the charging prompting method further includes: controlling, in response to a display duration of the charging prompting information outputted by the floating window reaching a third predetermined duration, the floating window to disappear.

Said controlling the floating window to disappear refers to that the charging prompting information is controlled to disappear. The floating window can be closed to close the charging prompting information.

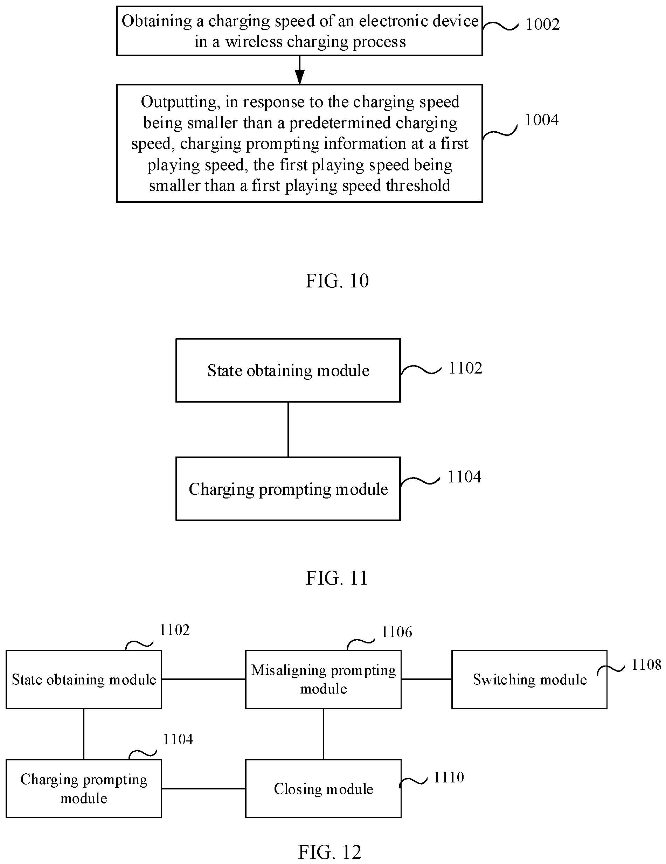

FIG. 10 is a flowchart of a charging prompting method according to another embodiment. As illustrated in FIG. 10, the charging prompting method includes the following actions in blocks.

At block 1002, a charging speed of an electronic device in a wireless charging process is obtained.

Specifically, in the wireless charging process of the electronic device, when charging with high power, the charging speed will be fast, and when charging with low power, the charging speed will be slow. A mapping relation between the charging power and the charging speed can be established in advance. The electronic device may detect the charging power, and acquire a charging speed based on the charging power from the mapping relation between the charging power and the charging speed, which is established in advance. A magnitude of the detected charging power may be influenced by the following factors: a distance between the electronic device and the wireless charging device, whether other objects exist between the electronic device and the wireless charging device, a charging power that can be provided by the wireless charging device, and the like.

At block 1004, in response to the charging speed being smaller than a predetermined charging speed, charging prompting information is output at a first playing speed. The first playing speed is smaller than a first playing speed threshold.

The predetermined charging speed is set in advance and can be determined based on the speed required by the normal charging. A state in which the charging speed is smaller than the predetermined charging speed may include a state in which the receiving coil of the electronic device is misaligned with the transmitting coil of the wireless charging device, a charging state in which the charging power provided by the wireless charging device is smaller than the predetermined charging power, a state in which an obstacle exists between the electronic device and the wireless charging device, and the like. The first playing speed may be set in advance to be, for example, 5 frames/sec, which is merely an example but not limited in the present disclosure. The first playing speed threshold is a predetermined speed threshold, for example, 10 frames/second, which is merely an example but not limited in the present disclosure.

In the present embodiment, the charging speed of the electronic device in the wireless charging process is obtained, and it is detected that the charging speed is smaller than the predetermined charging speed, and the charging prompting information is output at the first playing speed. In this way, the user can be visually prompted that the electronic device is in the abnormal charging state, and the invalid charging time of the electronic device is shortened, thereby improving the charging efficiency.

In an embodiment, a state in which the charging speed is smaller than the predetermined charging speed includes a state in which the receiving coil of the electronic device is misaligned with the transmitting coil of the wireless charging device.

When the receiving coil of the electronic device is misaligned with the transmitting coil of the wireless charging device and the electronic device is in the screen-blanking state, the misaligning prompting information is displayed in the screen-blanking state. The misaligning prompting information is used to indicate that the receiving coil of the electronic device is misaligned with the transmitting coil of the wireless charging device.

Optionally, when it is detected that the charging speed is smaller than the predetermined charging speed, the transmitting coil of the wireless charging device may be disposed at a central position of the wireless charging device, and at least one group of symmetrical pressure sensors is arranged around the transmitting coil of the wireless charging device. Each group of symmetrical pressure sensors includes two pressure sensors. The two pressure sensors are symmetrically arranged with respect to the center of the transmitting coil. The receiving coil of the electronic device is disposed at the center of the electronic device. When the electronic device is placed on the wireless charging device for charging, the pressure sensors symmetrically arranged around the transmitting coil of the wireless charging device can detect pressure values. A pressure difference is obtained based on the pressure values of the two symmetrical pressure sensors. When an absolute value of the pressure difference between the two symmetrical pressure sensors is greater than a first predetermined pressure value, the receiving coil of the electronic device is considered to be misaligned with the transmitting coil of the wireless charging device, i.e., a misalignment exists during the charging. A direction and a distance that the electronic device should be moved are determined based on the pressure difference. When the electronic device is skewed towards the pressure sensor having a greater pressure value, the electronic device needs to be moved towards the pressure sensor having a smaller pressure value. When the absolute value of the pressure difference between the two symmetrical pressure sensors is smaller than or equal to a second predetermined pressure value, the receiving coil of the electronic device is considered to be aligned with the transmitting coil of the wireless charging device, i.e., no misalignment exists during the charging. The first predetermined pressure value is greater than or equal to the second predetermined pressure value.

The electronic device may receive a message transmitted by the wireless charging device and indicating that the receiving coil of the electronic device is misaligned with the transmitting coil of the wireless charging device. It is determined, based on the message, that the charging state of the electronic device is the charging misaligning state. The message indicating that the receiving coil of the electronic device is misaligned with the transmitting coil of the wireless charging device is generated when it is detected that the absolute value of the pressure difference between the at least one group of two symmetrical pressure sensors obtained by the wireless charging device is greater than the first predetermined pressure value.

In other embodiments, when the electronic device is being charged and detects that a coupling resonant frequency between the receiving coil of the electronic device and the transmitting coil of the wireless charging device is smaller than a predetermined frequency, it is determined that the charging state of the electronic device is the charging misaligning state. The predetermined frequency is determined based on coupling resonance characteristics of the receiving coil of the electronic device and the transmitting coil of the wireless charging device, and it can also be obtained by testing a relation between the misalignment and the coupling resonance frequency for multiple times.

The misaligning prompting information may be represented in at least one form of text, audio, or graphics. In the form of text, as illustrated in FIG. 5B, the misaligning prompting information is directly displayed as text on the electronic device, for example, when the misalignment exists during charging, a position of the electronic device needs to be adjusted to charge more efficiently, and the like, which is not limited in the present disclosure. In the form of audio, the misaligning prompting information is played by sound. In the form of graphics, as illustrated in FIG. 5A, two graphs are adopted to respectively represent the receiving coil of the electronic device and the transmitting coil of the wireless charging device, so as to display the misaligning prompting information.

Optionally, the misaligning prompting information is displayed in an Always-On display mode in the screen-blanking state.

In the embodiment, when it is detected that the receiving coil of the electronic device is misaligned with the transmitting coil of the wireless charging device and the electronic device is in the screen-blanking state, the misaligning prompting information is displayed in the screen-blanking state. In this way, the user can be visually prompted in the screen-blanking state that the electronic device is misaligned during the charging. By adopting the Always-On display mode for prompting, the electric quantity of the electronic device can be saved.

In an embodiment, the state in which the charging speed is smaller than the predetermined charging speed includes the state that the receiving coil of the electronic device is misaligned with the transmitting coil of the wireless charging device.

When the receiving coil of the electronic device is misaligned with the transmitting coil of the wireless charging device and the electronic device is in the screen-blanking state, the electronic device is controlled to enter the screen-lighting state from the screen-lighting state and display the misaligning prompting window containing the misaligning prompting information in the screen-lighting state. The misaligning prompting information is used to indicate that the receiving coil of the electronic device is misaligned with the transmitting coil of the wireless charging device.

Optionally, when the display duration of the misaligning prompting window reaches the first predetermined duration and the triggering operation on the misaligning prompting window is not obtained, the electronic device is controlled to enter the screen-blanking state and display the misaligning prompting information in the screen-blanking state.

The screen-lighting state refers to a lighting state of the screen of the electronic device. The misaligning prompting window is used for displaying the misaligning prompting information. The misaligning prompting window can be a pop-up window or a floating window, etc. The misaligning prompting information may be represented in at least one form of text, audio, or graphic. The first predetermined duration can be determined as needed, for example, it can be 2 seconds, 3 seconds, 5 seconds, 1 minute, and the like. The display duration of the misaligning prompting window is timed from the occurrence of the misaligning prompting window.

When the charging misalignment is detected in the screen-blanking state, the electronic device is controlled to enter the screen-lightening state from the screen-blanking state and display the misaligning prompting window containing the misaligning prompting information in the screen-lightening state. In this way, when the charging misalignment is detected in the screen-blanking state, the electronic device can timely enter the screen-lightening state, and the misaligning prompting window is displayed in the screen-lightening state to display the misaligning prompting information through the misaligning prompting window. The screen-lightening and the misaligning prompting information, as double prompting, can achieve an intensive prompting.

The triggering operation on the misaligning prompting window may include clicking, double clicking, applying a pressing force greater than a pressure threshold, pressing for a pressing duration longer than a duration threshold, and the like. When the display duration of the misaligning prompting window reaches the first predetermined duration and the triggering operation on the misaligning prompting window is not obtained, the electronic device is controlled to enter the screen-blanking state, and the wireless charging is continued, such that a brightness of the screen can be reduced, thereby preventing the charging efficiency from being influenced.

In an embodiment, the state in which the charging speed is smaller than the predetermined charging speed includes the state in which the receiving coil of the electronic device is misaligned with the transmitting coil of the wireless charging device.

When the receiving coil of the electronic device is misaligned with the transmitting coil of the wireless charging device and the electronic device is in the screen-lighting state, the misaligning prompting window containing the misaligning prompting information is displayed. The misaligning prompting information is used to indicate information about the relative positions between the electronic device and the wireless charging device.

The screen-lighting state refers to a lighting state of the screen of the electronic device. The misaligning prompting window is used for displaying the misaligning prompting information. The misaligning prompting window can be a pop-up window or a floating window and the like. The misaligning prompting information may be represented in at least one form of text, audio, or graphic.

In an embodiment, when the display duration of the misaligning prompting window reaches the second predetermined duration and the triggering operation on the misaligning prompting window is not obtained, the misaligning prompting window is controlled to disappear, and the charging prompting information is output at the first playing speed in the screen-lighting state.

The second predetermined duration can be determined as needed, for example, it can be 2 seconds, 3 seconds, 5 seconds, 1 minute, and the like. The display duration of the misaligning prompting window is timed from the occurrence of the misaligning prompting window.

In an embodiment, the charging prompting method described above further includes: in response to detecting that a position of the electronic device is continuously changed for predetermined times and in response to the receiving coil of the electronic device being still misaligned with the transmitting coil of the wireless charging device, stopping outputting the misaligning prompting information. In this way, the stopped prompting can reduce the disturbance to the user.

In an embodiment, said outputting the charging prompting information includes: outputting, in a floating window, the charging prompting information on the electronic device. When a triggering operation on the floating window is detected, an interface element covered by the floating window can respond to the triggering operation.

The charging prompting information is displayed in the floating window without affecting the triggering operation on the screen of the electronic device. That is, the floating window will neither intercept the triggering operation nor respond to the triggering operation. In this way, by displaying the charging prompting information in the floating window, which will not respond to the triggering operation, it is avoided that the charging prompting information of the wireless charging disturbs the user's current operation.

In an embodiment, subsequent to said outputting, in the floating window, the charging prompting information on the electronic device, the method further includes: controlling, in response to a display duration of the charging prompting information outputted by the floating window reaching a third predetermined duration, the floating window to disappear.

The third predetermined duration can be determined as needed. The floating window disappears after being displayed for a certain time. In this way, the space occupied by the floating window on the interface can be saved, facilitating checking the electronic device.

In an embodiment, the charging prompting method described above further includes: when the charging speed is greater than or equal to the predetermined charging speed, outputting the charging prompting information at the second playing speed. The second playing speed is greater than the second playing speed threshold, and the second playing speed threshold is greater than or equal to the first playing speed threshold.

When the charging speed is greater than or equal to the predetermined charging speed, the charging prompting information is output at the second playing speed. In this way, the user can be visually prompted that the electronic device is in the normal charging state.

It should be understood that, although the actions in blocks in the flowcharts of FIG. 2 and FIG. 10 are illustrated in an order as indicated by the arrows, they are not necessarily performed in the order as indicated by the arrows. The actions in blocks are not limited to being performed in the specific order as illustrated, and they may be performed in other orders, unless explicitly stated herein. Moreover, at least some of the actions in blocks illustrated in FIG. 2 and FIG. 10 may include multiple sub-blocks or multiple stages, which are not necessarily performed at the same time and may be performed at different moments. The sub-blocks or stages are not necessarily performed sequentially, and they may be performed rotationally or alternately with other actions or at least some of the sub-blocks or stages of other actions.

FIG. 11 is a structural block diagram of a charging prompting apparatus according to an embodiment. As illustrated in FIG. 11, in an embodiment, a charging prompting apparatus includes a state obtaining module 1102 and a charging prompting module 1104.

The state obtaining module 1102 is configured to obtain a charging state of an electronic device in a wireless charging process.

The charging prompting module 1104 is configured to, in response to the charging state being an abnormal charging state, output charging prompting information at a first playing speed; and in response to the charging state being a normal charging state, output the charging prompting information at a second playing speed. The second playing speed is greater than the first playing speed.

The charging prompting information may be animated information, audio information, or text information, or the like.

In the present embodiment, the charging state of the electronic device in the wireless charging process is obtained, when the charging state is determined to be the abnormal charging state, the charging prompting information is output at the first playing speed, and when the charging state is the normal charging state, the charging prompting information is output at the second playing speed, the second playing speed being greater than the first playing speed. In this way, different prompting forms can be adopted to prompt in different charging states, and thus the user of the electronic device can be visually prompted that the electronic device is in the abnormal charging state, thereby shortening the invalid charging time of the electronic device and improving a charging efficiency.

In an embodiment, the charging prompting module 1104 is further configured to, in response to the charging state being a normal charging state, output the charging prompting information at a second playing speed. The second playing speed is greater than the first playing speed.

In an embodiment, the abnormal charging state refers to the charging misaligning state. The charging misaligning state indicates that the receiving coil of the electronic device is misaligned with the transmitting coil of the wireless charging device. The charging prompting module 1104 is further configured to output the charging prompting information at the first playing speed when the charging state is the charging misaligning state.

In an embodiment, as illustrated in FIG. 12, the abnormal charging state is the charging misaligning state, and the charging misaligning state indicates that the receiving coil of the electronic device is misaligned with the transmitting coil of the wireless charging device. The charging prompting apparatus described above further includes a misaligning prompting module 1106, a switching module 1108, and a closing module 1110.

The misaligning prompting module 1106 is configured to, in response to the charging state being the charging misaligning state and in response to the electronic device being in the screen-blanking state, display misaligning prompting information in the screen-blanking state. The misaligning prompting information is used to indicate that the receiving coil of the electronic device is misaligned with the transmitting coil of the wireless charging device.

In an embodiment, the abnormal charging state is the charging misaligning state, and the charging misaligning state indicates that the receiving coil of the electronic device is misaligned with the transmitting coil of the wireless charging device. The switching module 1108 is configured to, prior to displaying the misaligning prompting information in the screen-blanking state, control the electronic device to enter a screen-lighting state from a screen-blanking state. The misaligning prompting module 1106 is further configured to display a misaligning prompting window containing the misaligning prompting information in the screen-lighting state. The misaligning prompting information is used to indicate that the receiving coil of the electronic device is misaligned with the transmitting coil of the wireless charging device.

The switching module 1108 is further configured to, in response to the display duration of the misaligning prompting window reaching a first predetermined duration and a triggering operation on the misaligning prompting window not being obtained, control the electronic device to enter the screen-blanking state and display the misaligning prompting information in the screen-blanking state.

In an embodiment, the closing module 1110 is configured to, in response to the triggering operation on the misaligning prompting window being obtained, control the misaligning prompting window to disappear. The charging prompting module 1104 is further configured to output the charging prompting information at the first playing speed in the screen-lighting state.

In an embodiment, the closing module 1110 is further configured to, subsequent to displaying the misaligning prompting information in the screen-blanking state, in response to the charging state being the normal charging state, control the misaligning prompting information to disappear. The charging prompting module 1104 is further configured to output the charging prompting information at a second playing speed. The normal charging state is that the receiving coil of the electronic device is aligned with the transmitting coil of the wireless charging device.

In an embodiment, the abnormal charging state is the charging misaligning state, and the charging misaligning state indicates that the receiving coil of the electronic device is misaligned with the transmitting coil of the wireless charging device. The misaligning prompting module 1106 is further configured to, in response to the charging state being the charging misaligning state and in response to the electronic device being in the screen-lighting state, display the misaligning prompting window containing the misaligning prompting information.

In an embodiment, the closing module 1108 is further configured to, in response to the triggering operation on the misaligning prompting window being obtained, control the misaligning prompting window to disappear. The charging prompting module 1104 is further configured to output the charging prompting information at the first playing speed in the screen-lighting state.

In an embodiment, the closing module 1108 is further configured to, in response to the display duration of the misaligning prompting window reaching a second predetermined duration and the triggering operation on the misaligning prompting window not being obtained, control the misaligning prompting window to disappear. The charging prompting module 1104 is further configured to output the charging prompting information at the first playing speed in the screen-lighting state.

In an embodiment, the misaligning prompting information includes marked position information of the receiving coil of the electronic device and marked position information of the transmitting coil of the wireless charging device.

In an embodiment, the misaligning prompting module 1108 is further configured to, in response to detecting that a position of the electronic device is continuously changed for predetermined times and in response to the charging state of the electronic device being still in the charging misaligning state, stop outputting the misaligning prompting information.

In an embodiment, the misaligning prompting module 1108 is further configured to display the misaligning prompting information in an Always-On display mode in the screen-blanking state.

In an embodiment, the abnormal charging state includes a situation that an obstacle exists between the electronic device and the wireless charging device, or a situation that a charging power received by the electronic device is smaller than a predetermined charging power.

In an embodiment, the charging prompting module 1104 is further configured to output, in a floating window, the charging prompting information on the electronic device. When a triggering operation on the floating window is detected, an interface element covered by the floating window can respond to the triggering operation.

In an embodiment, the closing module 1110 is further configured to, in response to a display duration of the charging prompting information outputted by the floating window reaching a third predetermined duration, control the floating window to disappear.

The state obtaining module 1102 is further configured to, in response to a charging power of the electronic device in the wireless charging process being a predetermined charging power, determine that the charging state of the electronic device is the normal charging state; and in response to the charging power of the electronic device in the wireless charging process being smaller than the predetermined charging power, determine that the charging state of the electronic device is the abnormal charging state.

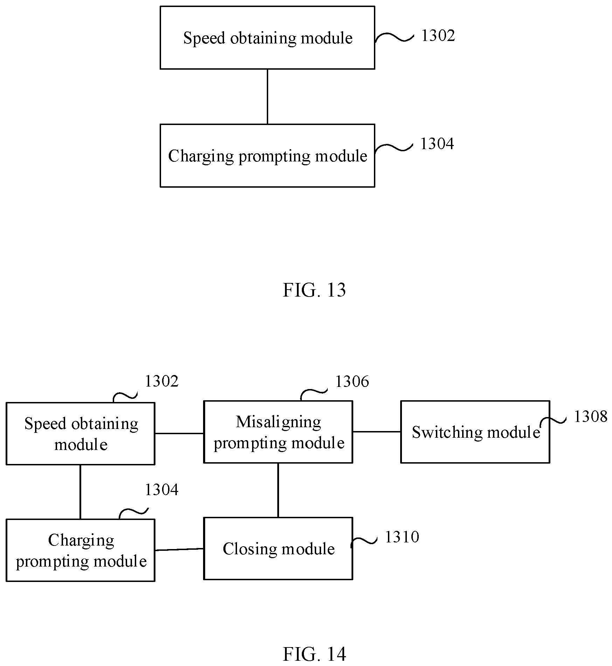

FIG. 13 is a structural block diagram of a charging prompting apparatus according to another embodiment. As illustrated in FIG. 13, the charging prompting apparatus includes a speed obtaining module 1302 and a charging prompting module 1304.

The speed obtaining module 1302 is configured to obtain a charging speed of an electronic device in a wireless charging process.

The charging prompting module 1304 is configured to output, in response to the charging speed being smaller than a predetermined charging speed, charging prompting information at a first playing speed. The first playing speed is smaller than a first playing speed threshold.

In an embodiment, as illustrated in FIG. 14, the charging prompting apparatus further includes a misaligning prompting module 1306, a switching module 1308, and a closing module 1310.

The state in which the charging speed is smaller than the predetermined charging speed includes that a receiving coil of the electronic device is misaligned with a transmitting coil of the wireless charging device.

The misaligning prompting module 1306 is configured to, in response to the receiving coil of the electronic device being misaligned with the transmitting coil of the wireless charging device and in response to the electronic device being in a screen-blanking state, display misaligning prompting information in the screen-blanking state. The misaligning prompting information is used to indicate that the receiving coil of the electronic device is misaligned with the transmitting coil of the wireless charging device.

In an embodiment, the state in which the charging speed is smaller than the predetermined charging speed includes that the receiving coil of the electronic device is misaligned with the transmitting coil of the wireless charging device.

The switching module 1308 is configured to control, in response to the receiving coil of the electronic device being misaligned with the transmitting coil of the wireless charging device and in response to the electronic device being in the screen-blanking state, the electronic device to enter a screen-lighting state from the screen-blanking state and display a misaligning prompting window containing the misaligning prompting information in the screen-lighting state. The misaligning prompting information is used to indicate that the receiving coil of the electronic device is misaligned with the transmitting coil of the wireless charging device.

The switching module 1308 is further configured to, in response to the display duration of the misaligning prompting window reaching a first predetermined duration and in response to a triggering operation on the misaligning prompting window not being obtained, control the electronic device to enter the screen-blanking state and display the misaligning prompting information in the screen-blanking state.

In an embodiment, the state in which the charging speed is smaller than the predetermined charging speed includes that the receiving coil of the electronic device is misaligned with a transmitting coil of the wireless charging device.

The misaligning prompting module 1306 is further configured to, in response to the receiving coil of the electronic device being misaligned with the transmitting coil of the wireless charging device and in response to the electronic device being in the screen-blanking state, display the misaligning prompting window containing the misaligning prompting information. The misaligning prompting information is used to indicate that the receiving coil of the electronic device is misaligned with the transmitting coil of the wireless charging device.

The closing module 1310 is configured to, in response to the display duration of the misaligning prompting window reaching a second predetermined duration and in response to the triggering operation on the misaligning prompting window not being obtained, control the misaligning prompting window to disappear, and output the charging prompting information at the first playing speed in the screen-lighting state.

In an embodiment, the misaligning prompting module 1306 is further configured to, in response to detecting that a position of the electronic device is continuously changed for predetermined times and in response to the receiving coil of the electronic device being still misaligned with the transmitting coil of the wireless charging device, stop outputting the misaligning prompting information.

The charging prompting module 1304 is further configured to output, in a floating window, the charging prompting information on the electronic device. When a triggering operation on the floating window is detected, an interface element covered by the floating window can respond to the triggering operation.

The closing module 1310 is further configured to, in response to the display duration of the charging prompting information outputted by the floating window reaching a third predetermined duration, control the floating window to disappear.

The division of the respective modules in the charging prompting apparatus is merely illustrative. In other embodiments, the charging prompting apparatus may be divided into different modules as needed to complete all or part of the functions of the charging prompting apparatus.

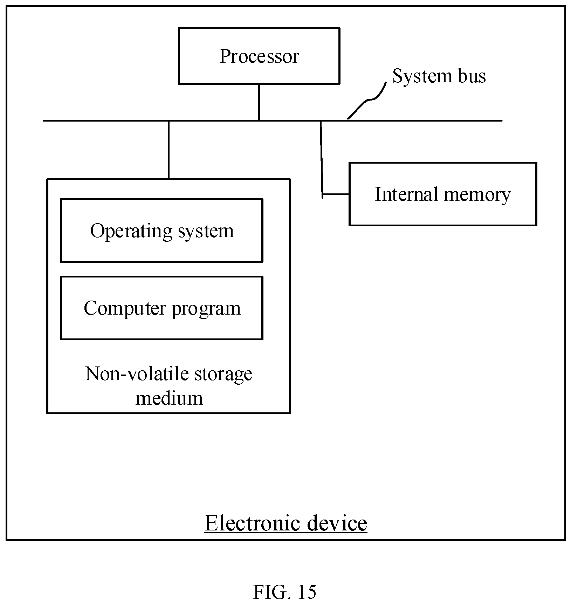

FIG. 15 is a schematic diagram illustrating an internal structure of an electronic device according to an embodiment. As illustrated in FIG. 15, the electronic device includes a processor and a memory, which are connected by a system bus. The processor has calculation and control capability and can support the operation of the whole electronic device. The memory may include a non-volatile storage media and an internal memory. The non-volatile storage medium stores an operating system and a computer program. The computer program is executable by a processor to implement the charging prompting method provided in the embodiments. The internal memory provides a cached operating environment for computer programs of an operating system in the non-volatile storage medium. The electronic device can be a mobile phone, a tablet computer, a personal digital assistant, a wearable device, or a wireless intelligent device. The wireless intelligent device may include a wireless earphone or a wireless sound box, and the like.

The respective modules in the charging prompting apparatus provided in the embodiment of the present disclosure may be embodied in the form of a computer program. The computer program may be executed on a terminal or a server. The program modules constituted by the computer program may be stored on the memory of the terminal or the server. The computer program, when being executed by a processor, performs the actions of the method described in the embodiments of the present disclosure.

The embodiments of the present disclosure further provide a computer-readable storage medium. One or more non-transitory computer-readable storage media containing computer-executable instructions that, when executed by one or more processors, cause the processors to perform the actions of the charging prompting method.

A computer program product has instructions stored thereon. The instructions, when being executed on a computer, cause the computer to perform the charging prompting method.

Any reference to memory, storage, databases, or other media used by embodiments of the present disclosure may include non-volatile and/or volatile memory. Suitable non-volatile memory may include Read-Only Memory (ROM), Programmable ROM (PROM), Electrically Programmable ROM (EPROM), Electrically Erasable Programmable ROM (EEPROM), or flash memory. The volatile memory may include Random Access Memory (RAM), which acts as external cache memory. By way of illustration and not limitation, RAM is available in a variety of forms such as Static RAM (SRAM), Dynamic RAM (DRAM), Synchronous DRAM (SDRAM), Double Data Rate SDRAM (DDR SDRAM), Enhanced SDRAM (ESDRAM), Synchronous Link (Synchlink) DRAM (SLDRAM), Rambus Direct RAM (RDRAM), Direct Rambus Dynamic RAM (DRDRAM), and Rambus Dynamic RAM (RDRAM).

The above embodiments merely illustrate some implementations of the present disclosure, which are described in details but are not construed to limit the scope of the present disclosure. It should be understood that those skilled in the art can make various modifications and improvements without departing from the principle of the present disclosure. These modifications and improvements shall fall within the protection scope of the present disclosure. The protection scope of the present disclosure is defined by the appended claims.

## Claims

1. A charging prompting method, comprising:
obtaining a charging state of an electronic device in a wireless charging process;
outputting, in response to the charging state being an abnormal charging state, charging prompting information at a first playing speed; and
outputting, in response to the charging state being a normal charging state, the charging prompting information at a second playing speed, the second playing speed being greater than the first playing speed.

2. The charging prompting method according to claim 1, wherein the abnormal charging state is a charging misaligning state in which a receiving coil of the electronic device is misaligned with a transmitting coil of a wireless charging device.

3. The charging prompting method according to claim 2, further comprising:
displaying, in response to the charging state being the charging misaligning state and the electronic device being in a screen-blanking state, misaligning prompting information in the screen-blanking state, wherein the misaligning prompting information is used to indicate that the receiving coil of the electronic device is misaligned with the transmitting coil of the wireless charging device.

4. The charging prompting method according to claim 2, further comprising:
controlling, in response to the charging state being the charging misaligning state and the electronic device being in a screen-blanking state, the electronic device to enter a screen-lighting state from the screen-blanking state and display a misaligning prompting window containing the misaligning prompting information in the screen-lighting state, wherein the misaligning prompting information is used to indicate that the receiving coil of the electronic device is misaligned with the transmitting coil of the wireless charging device.

5. The charging prompting method according to claim 4, further comprising:
controlling, in response to a display duration of the misaligning prompting window reaching a first predetermined duration and in response to a triggering operation on the misaligning prompting window not being obtained, the electronic device to enter the screen-blanking state and display the misaligning prompting information in the screen-blanking state.

6. The charging prompting method according to claim 4, further comprising:
controlling, in response to a triggering operation on the misaligning prompting window being obtained, the misaligning prompting window to disappear; and
outputting the charging prompting information at the first playing speed in the screen-lighting state.

7. The charging prompting method according to claim 3, further comprising, subsequent to said displaying the misaligning prompting information in the screen-blanking state:
in response to the charging state being the normal charging state, controlling the misaligning prompting information to disappear, and outputting the charging prompting information at the second playing speed, wherein the normal charging state indicates that the receiving coil of the electronic device is aligned with the transmitting coil of the wireless charging device.

8. The charging prompting method according to claim 2, further comprising:
displaying, in response to the charging state being the charging misaligning state and the electronic device being in a screen-lighting state, a misaligning prompting window containing the misaligning prompting information, wherein the misaligning prompting information is used to indicate that the receiving coil of the electronic device is misaligned with the transmitting coil of the wireless charging device.

9. The charging prompting method according to claim 8, further comprising:
in response to a triggering operation on the misaligning prompting window being obtained, controlling the misaligning prompting window to disappear, and outputting the charging prompting information at the first playing speed in the screen-lighting state.

10. The charging prompting method according to claim 8, further comprising:
in response to a display duration of the misaligning prompting window reaching a second predetermined duration and in response to a triggering operation on the misaligning prompting window not being obtained, controlling the misaligning prompting window to disappear, and outputting the charging prompting information at the first playing speed in the screen-lighting state.

11. The charging prompting method according to any one of claims 3 to 10, further comprising:
in response to detecting that a position of the electronic device is continuously changed for predetermined times and in response to the charging state of the electronic device being still in the charging misaligning state, stopping outputting the misaligning prompting information.

12. The charging prompting method according to any one of claims 2 to 10, wherein the receiving coil of the electronic device is disposed at a central position of the electronic device; and wherein the method further comprises:
receiving a message transmitted by the wireless charging device and indicating that the receiving coil of the electronic device is misaligned with the transmitting coil of the wireless charging device; and
determining, based on the message, that the charging state of the electronic device is the charging misaligning state,
wherein the message indicating that the receiving coil of the electronic device is misaligned with the transmitting coil of the wireless charging device is generated in response to detecting that an absolute value of a pressure difference between at least one group of two symmetrical pressure sensors obtained by the wireless charging device is greater than a first predetermined pressure value, wherein the transmitting coil of the wireless charging device is disposed at a central position of the wireless charging device, and wherein the at least one group of two symmetrical pressure sensors is arranged around the transmitting coil of the wireless charging device.

13. The charging prompting method according to any one of claims 2 to 10, further comprising:
determining, in response to detecting, by the electronic device, that a coupling resonant frequency between the receiving coil of the electronic device and the transmitting coil of the wireless charging device is smaller than a predetermined frequency, that the charging state of the electronic device is the charging misaligning state.

14. The charging prompting method according to claim 3, wherein said displaying the misaligning prompting information in the screen-blanking state comprises:
displaying the misaligning prompting information in an Always-On display mode in the screen-blanking state.

15. The charging prompting method according to claim 1, wherein the abnormal charging state comprises a situation that an obstacle exists between the electronic device and the wireless charging device, or a situation that a charging power received by the electronic device is smaller than a predetermined charging power.

16. The charging prompting method according to any one of claims 1 to 10, wherein said outputting the charging prompting information comprises:
outputting, in a floating window, the charging prompting information on the electronic device,
wherein when a triggering operation on the floating window is detected, an interface element covered by the floating window responds to the triggering operation.

17. The charging prompting method according to claim 16, further comprising, subsequent to said outputting, in the floating window, the charging prompting information on the electronic device:
controlling, in response to a display duration of the charging prompting information outputted by the floating window reaching a third predetermined duration, the floating window to disappear.

18. The charging prompting method according to any one of claims 1 to 10, wherein the charging prompting information comprises animated prompting information, audio prompting information, or text information.

19. The charging prompting method according to claim 1, further comprising:
determining, in response to a charging power of the electronic device in the wireless charging process being a predetermined charging power, that the charging state of the electronic device is the normal charging state; and
determining, in response to the charging power of the electronic device in the wireless charging process being smaller than the predetermined charging power, that the charging state of the electronic device is the abnormal charging state.

20. A charging prompting method, comprising:
obtaining a charging speed of an electronic device in a wireless charging process;
outputting, in response to the charging speed being smaller than a predetermined charging speed, charging prompting information at a first playing speed, the first playing speed being smaller than a first playing speed threshold.

21. The charging prompting method according to claim 20, wherein a state in which the charging speed is smaller than the predetermined charging speed comprises a state in which a receiving coil of the electronic device is misaligned with a transmitting coil of a wireless charging device.

22. The charging prompting method according to claim 21, further comprising:
displaying, in response to the receiving coil of the electronic device being misaligned with the transmitting coil of the wireless charging device and in response to the electronic device being in a screen-blanking state, misaligning prompting information in the screen-blanking state, wherein the misaligning prompting information is used to indicate that the receiving coil of the electronic device is misaligned with the transmitting coil of the wireless charging device.

23. The charging prompting method according to claim 21, further comprising:
controlling, in response to the receiving coil of the electronic device being misaligned with the transmitting coil of the wireless charging device and in response to the electronic device being in a screen-blanking state, the electronic device to enter a screen-lighting state from the screen-blanking state and display a misaligning prompting window containing the misaligning prompting information in the screen-lighting state, wherein the misaligning prompting information is used to indicate that the receiving coil of the electronic device is misaligned with the transmitting coil of the wireless charging device.

24. The charging prompting method according to claim 23, further comprising:
controlling, in response to a display duration of the misaligning prompting window reaching a first predetermined duration and in response to a triggering operation on the misaligning prompting window not being obtained, the electronic device to enter the screen-blanking state and display the misaligning prompting information in the screen-blanking state.

25. The charging prompting method according to claim 21, further comprising:
displaying, in response to the receiving coil of the electronic device being misaligned with the transmitting coil of the wireless charging device and in response to the electronic device being in a screen-lighting state, a misaligning prompting window containing the misaligning prompting information, wherein the misaligning prompting information is used to indicate that the receiving coil of the electronic device is misaligned with the transmitting coil of the wireless charging device.

26. The charging prompting method according to claim 25, further comprising:
in response to a display duration of the misaligning prompting window reaching a second predetermined duration and in response to a triggering operation on the misaligning prompting window not being obtained, controlling the misaligning prompting window to disappear, and outputting the charging prompting information at the first playing speed in the screen-lighting state.

27. The charging prompting method according to any one of claims 22 to 26, further comprising:
in response to detecting that a position of the electronic device is continuously changed for predetermined times and in response to the receiving coil of the electronic device being still misaligned with the transmitting coil of the wireless charging device, stopping outputting the misaligning prompting information.

28. The charging prompting method according to any one of claims 21 to 26, wherein the receiving coil of the electronic device is disposed at a central position of the electronic device; and wherein the method further comprises:
receiving a message transmitted by the wireless charging device and indicating that the receiving coil of the electronic device is misaligned with the transmitting coil of the wireless charging device; and
determining, based on the message, that the charging state of the electronic device is the charging misaligning state;
wherein the message indicating that the receiving coil of the electronic device is misaligned with the transmitting coil of the wireless charging device is generated in response to detecting that an absolute value of a pressure difference between at least one group of two symmetrical pressure sensors obtained by the wireless charging device is greater than a first predetermined pressure value, wherein the transmitting coil of the wireless charging device is disposed at a central position of the wireless charging device, and wherein the at least one group of two symmetrical pressure sensors is arranged around the transmitting coil of the wireless charging device.

29. The charging prompting method according to any one of claims 21 to 26, further comprising:
determining, in response to detecting, by the electronic device, that a coupling resonant frequency between the receiving coil of the electronic device and the transmitting coil of the wireless charging device is smaller than a predetermined frequency, that the charging state of the electronic device is the charging misaligning state.

30. The charging prompting method according to claim 20, wherein a state in which the charging speed is smaller than the predetermined charging speed comprises a state in which an obstacle exists between the electronic device and the wireless charging device, or a state in which a charging power provided by the wireless charging device is smaller than a predetermined charging power.

31. The charging prompting method according to any one of claims 20 to 26, wherein said outputting the charging prompting information comprises:
outputting, in a floating window, the charging prompting information on the electronic device,
wherein when a triggering operation on the floating window is detected, an interface element covered by the floating window responds to the triggering operation.

32. The charging prompting method according to claim 31, further comprising, subsequent to said outputting, in the floating window, the charging prompting information on the electronic device:
controlling, in response to a display duration of the charging prompting information outputted by the floating window reaching a third predetermined duration, the floating window to disappear.

33. A charging prompting apparatus, comprising:
a state obtaining module configured to obtain a charging state of an electronic device in a wireless charging process; and
a charging prompting module configured to:
output, in response to the charging state being an abnormal charging state, charging prompting information at a first playing speed; and
output, in response to the charging state being a normal charging state, the charging prompting information at a second playing speed, the second playing speed being greater than the first playing speed.

34. A charging prompting apparatus, comprising:
a speed obtaining module configured to obtain a charging speed of an electronic device in a wireless charging process; and
a charging prompting module configured to output, in response to the charging speed being smaller than a predetermined charging speed, charging prompting information at a first playing speed, the first playing speed being smaller than a first playing speed threshold.

35. An electronic device, comprising:
a processor; and
a memory having a computer program stored thereon,
wherein the computer program, when being executed by the processor, implements steps of the charging prompting method according to any one of claims 1 to 19 or according to any one of claims 20 to 32.

36. A computer-readable storage medium, having a computer program stored thereon, wherein the computer program, when being executed by a processor, implements steps of the charging prompting method according to any one of claims 1 to 19 or according to any one of claims 20 to 32.
